(19)

(11) EP 3 392 795 B1

(12) **FASCICULE DE BREVET EUROPEEN**

(45) Date de publication et mention de la délivrance du brevet: **29.01.2020 Bulletin 2020/05**

(21) Numéro de dépôt: **18167845.9**

(22) Date de dépôt: **17.04.2018**

(51) Int Cl.: ***G06F 21/75*** *(2013.01)*

(54) **CIRCUIT ELECTRONIQUE SECURISE PAR PERTURBATION DE SON ALIMENTATION**

DURCH SCHWANKUNGEN DER STROMVERSORGUNG GESICHERTE ELEKTRONISCHE SCHALTUNG

ELECTRONIC CIRCUIT SECURED BY FLUCTUATION OF ITS POWER SUPPLY

(84) Etats contractants désignés: **AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2017 FR 1753407**

(43) Date de publication de la demande: **24.10.2018 Bulletin 2018/43**

(73) Titulaire: **Tiempo**
**38330 Montbonnot St-Martin (FR)**

(72) Inventeurs:
- **Renaudin, Marc**
  **38330 Biviers (FR)**
- **Scarabello, Christophe**
  **38610 Gières (FR)**

(74) Mandataire: **Talbot, Alexandre**
**Cabinet Hecké**
**28 Cours Jean Jaurès**
**38000 Grenoble (FR)**

(56) Documents cités:
**FR-A1- 2 958 098**
**US-A1- 2003 154 389**
**US-A1- 2004 143 747**
**US-A1- 2006 156 039**
**US-B1- 6 419 159**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### Domaine technique de l'invention

L'invention est relative à un circuit électronique qui est mieux protégé contre les attaques extérieures, par exemple les attaques de type canaux cachés.

### État de la technique

Afin d'assurer un maximum de sécurité dans de nombreux domaines et notamment dans la transmission d'informations, les données sont chiffrées. Elles arrivent de manière claire à l'entrée du circuit de chiffrement et elles ressortent sous une forme non intelligible. Une manière de retrouver l'information qui a été chiffrée est de deviner le code utilisé pour chiffrer cette information.

Cependant, il n'est pas toujours possible de réaliser cette opération car il faut posséder des quantités importantes de données pour deviner les informations cachées et/ou les algorithmes de chiffrement. Une contre-mesure peut être d'analyser le fonctionnement du circuit de chiffrement. Là encore, de nombreuses parades existent pour empêcher l'ouverture de ce circuit intégré afin de deviner son fonctionnement.

Plusieurs stratégies ont été mises en place afin de deviner le fonctionnement du circuit de chiffrement en appliquant un signal connu en entrée et en observant le signal de sortie et de nombreuses grandeurs liées au fonctionnement du circuit de chiffrement, par exemple sa consommation électrique et son rayonnement électromagnétique. Il est alors possible de deviner le fonctionnement de blocs fonctionnels utilisés pour transformer le signal d'entrée en un signal de sortie chiffré.

De manière à augmenter la sécurité des informations intégrées dans les circuits électroniques asynchrones, il a été proposé de modifier les conditions d'alimentation de ces circuits.

Par exemple, le document US 2004/0143747 propose d'alimenter un circuit asynchrone avec une source d'alimentation variable aléatoirement. Cette configuration a pour objectif de prévenir des attaques par canaux cachés en empêchant de récupérer des informations fiables au moyen de dispositifs de mesures synchronisés avec le circuit asynchrone.

Le document propose d'utiliser une source de bruit qui alimente un générateur de nombres. Le générateur de nombres alimente un convertisseur numérique analogique qui fournit une information à un régulateur de tension. De cette manière, en fonction du signal émis par le générateur de nombres, le régulateur de tension fournit une tension d'alimentation qui évolue aux bornes du circuit asynchrone. Si le générateur de nombres est aléatoire alors la tension d'alimentation peut avoir une composante aléatoire.

Le document US 2006/0156039 propose également de modifier aléatoirement les conditions d'alimentation du circuit asynchrone afin de rendre plus difficile le traitement des données à l'intérieur du circuit asynchrone.

Il est également proposé dans le document US 6,698,662 de rajouter un module consommateur de courant qui est alimenté par la même source de courant que le circuit à protéger. Ce module consommateur de courant est configuré pour consommer du courant de manière aléatoire afin que l'analyse de la consommation électrique en provenance de la source de tension ou de courant soit la moins corrélée possible au fonctionnement du circuit à protéger. Cette solution est particulièrement compliquée à mettre en œuvre car elle impose de rajouter des éléments actifs dans le circuit intégré ce qui augmente la surface du circuit et sa consommation.

Le document US 2003/0154389 propose également d'appliquer une tension fluctuante aux bornes d'un circuit à protéger. Cette tension fluctuante est fournie au moyen d'un générateur de nombres aléatoires qui délivre des nombres à un convertisseur numérique-analogique délivrant alors une tension aléatoire. Cette tension aléatoire est fournie à un régulateur de courant ce qui fait fluctuer l'alimentation du circuit à protéger. Un enseignement sensiblement équivalent est fourni par le document FR2958098 Le document US 6,419,159 propose d'activer aléatoirement des puits de courant au moyen d'un générateur de nombres aléatoire. Ces connexions aléatoires ont pour objectif de masquer les différences de consommation de courant lors du fonctionnement du processeur.

### Objet de l'invention

Un objet de l'invention consiste à remédier à ces inconvénients, et à réaliser un circuit électronique qui est plus performant que les dispositifs de l'art antérieur pour contrer les attaques par canaux cachés.

Il est particulièrement avantageux de prévoir un circuit électronique comportant :

- un premier module logique configuré pour réaliser une première fonction,
- un générateur de nombres configuré pour générer au moins une série de premiers nombres consécutifs sur une première période de temps,
- un générateur de tension relié au générateur de nombres de manière à recevoir une première série d'informations consécutives représentatives de la série de premiers nombres, le générateur de tension étant configuré pour alimenter le premier module logique avec une première tension d'alimentation supérieure à une tension minimale de fonctionnement du premier module logique et une deuxième tension additionnelle variable ayant des caractéristiques électriques fonctions au moins de la première série d'informations consécutives.

Le circuit électronique est remarquable en ce que le générateur de tension est configuré de manière à délivrer une deuxième tension additionnelle variable qui comporte au moins :

- une composante représentative d'une tension fixe définie par une valeur de tension de décalage,
- une composante représentative d'une première tension périodique définie au moins par une première fréquence et une première amplitude.

Le générateur de tension est configuré de manière à ce que la valeur de la tension de décalage, la première fréquence et/ou la première amplitude soient définies au moins à partir de la série de premiers nombres, sur la première période de temps parmi une première série de tensions de décalage comportant plusieurs valeurs différentes de tensions de décalage, une deuxième série de premières fréquences comportant plusieurs valeurs différentes de premières fréquences et une troisième série de premières amplitudes comportant plusieurs valeurs différentes de premières amplitudes.

Dans un développement, le générateur de tension est configuré de manière à délivrer une deuxième tension additionnelle variable qui comporte, en plus, une composante représentative d'une deuxième tension périodique définie au moins par une deuxième fréquence et une deuxième amplitude et dans lequel le générateur de tension est configuré de manière à ce que la deuxième fréquence et/ou la deuxième amplitude soient définies au moins à partir de la série de premiers nombres, sur la première période de temps, parmi plusieurs deuxièmes fréquences et deuxièmes amplitudes.

De manière avantageuse, le générateur de tension est configuré de manière à ce que la composante représentative de la première tension périodique présente un déphasage avec la composante représentative de la deuxième tension périodique et dans lequel le générateur de tension est configuré de manière à ce que le déphasage soit défini au moins à partir de la série de premiers nombres, sur la première période de temps, parmi plusieurs déphasages.

Dans un mode de réalisation particulier, le générateur de tension est configuré pour délivrer une composante représentative de la première tension périodique qui présente une première forme d'onde différente d'une deuxième forme d'onde de la composante représentative de la deuxième tension périodique, la première forme d'onde et la deuxième forme d'onde étant avantageusement choisies parmi un signal sinusoïdal, un signal carré, un signal triangulaire, un signal trapézoïdal, un signal en dent de scie, un signal exponentiel et un signal logarithmique.

Il est intéressant de prévoir que le générateur de tension soit configuré pour délivrer une composante représentative de la première tension périodique qui présente un premier rapport cyclique et que le générateur de tension soit configuré de manière à ce que le premier rapport cyclique soit défini au moins à partir de la série de premiers nombres, sur la première période de temps, parmi plusieurs rapports cycliques différents.

Dans un autre mode de réalisation, la première série de tensions de décalage comporte une valeur nulle ou la troisième série de premières amplitudes comporte une valeur nulle.

Préférentiellement, le générateur de nombres est alimenté par le générateur de tension et la première tension d'alimentation est supérieure à une tension minimale de fonctionnement du générateur de nombres.

Avantageusement, le générateur de nombres est relié à un registre, le registre étant configuré pour transformer un nombre reçu depuis le générateur de nombres en une adresse d'une zone de mémoire stockant une ou plusieurs des caractéristiques électriques de la deuxième tension additionnelle aléatoire.

De manière particulière, le générateur de nombres est un générateur de nombres aléatoires.

Dans une alternative de réalisation, le générateur de nombres est réalisé en logique asynchrone et préférentiellement en logique asynchrone insensible aux délais.

Dans un mode de réalisation particulier, le générateur de nombres est configuré pour que la durée séparant l'émission de deux nombres consécutifs soit fonction des conditions d'alimentation à ses bornes d'alimentation.

Avantageusement, le premier module logique est muni d'un générateur de délai configuré pour insérer un délai dans le traitement de données par le premier module logique de manière à dissocier la durée totale de traitement de ladite donnée et les conditions d'alimentation du premier module logique. Dans un autre mode de réalisation particulier, le circuit électronique comporte un générateur d'horloge configuré pour générer un signal d'horloge, le générateur d'horloge étant relié au générateur de nombres et/ou au générateur de tension de manière à recevoir une information relative aux nombres générés par le générateur de nombres et adapter la fréquence du signal d'horloge aux conditions d'alimentation du circuit logique synchrone, le circuit logique étant un circuit synchrone synchronisé par ledit signal d'horloge.

Dans un développement spécifique, le générateur de tension comporte un régulateur de tension à chute faible muni d'un premier transistor ayant une borne d'entrée destinée à être reliée à une source d'alimentation et une borne de sortie connectée pour alimenter le premier module logique, le premier transistor possédant une électrode de commande connectée à la sortie d'un amplificateur, l'amplificateur possédant une première borne d'entrée recevant un signal périodique depuis un générateur de signal périodique configuré pour moduler une fréquence dudit signal périodique au moyen d'une première information reçue sur une première borne d'entrée et une amplitude dudit signal périodique au moyen d'une deuxième information reçus sur une deuxième borne d'entrée, l'amplificateur possédant une deuxième borne d'entrée recevant une tension depuis un fournisseur de tension, le fournisseur de tension étant configuré pour moduler la valeur de la tension délivrée en fonction d'une troisième information.

De manière alternative, le générateur de tension comporte un hacheur continu-continu muni d'un premier transistor ayant une borne d'entrée destinée à être reliée à une source d'alimentation et une borne de sortie connectée pour alimenter le premier module logique, le premier transistor possédant une électrode de commande connectée à la sortie d'un générateur de signal périodique configuré pour moduler une fréquence dudit signal périodique au moyen d'une première information reçue sur une première borne et une tension moyenne dudit signal périodique au moyen d'une deuxième information reçue sur une deuxième borne, la borne de sortie du premier transistor étant connectée au premier module logique par l'intermédiaire d'une inductance et d'un filtre configuré pour moduler l'amplitude de la tension délivrée par le premier transistor au moyen d'une troisième information reçue sur une borne de commande du filtre.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 illustre, de façon schématique, un mode de réalisation d'un circuit électronique selon l'invention;
- la figure 2 représente, de façon schématique, un mode de réalisation plus particulier d'un circuit électronique selon l'invention ;
- la figure 3 représente, de façon schématique, un autre mode de réalisation plus particulier d'un circuit électronique selon l'invention ;
- la figure 4 représente, de façon schématique, un autre mode de réalisation plus particulier d'un circuit électronique selon l'invention avec un bloc logique synchrone.

## Description détaillée

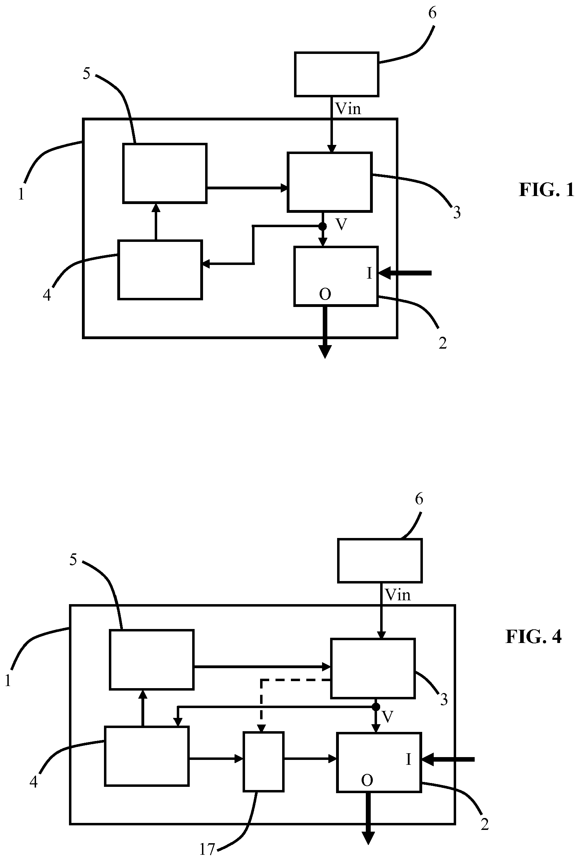

Comme illustré à la figure 1, le circuit électronique ou circuit intégré 1 comporte un circuit logique 2 également appelé module logique qui peut être un circuit synchrone ou un circuit asynchrone. Le circuit intégré 1 peut également comporter au moins un circuit logique 2, c'est-à-dire un premier circuit logique 2 et au moins un deuxième circuit logique (non représenté). Le circuit logique 2 est configuré pour réaliser une première fonction qui correspond à du traitement de données avec transformation des données entre l'entrée I et la sortie O. Le circuit logique 2 est configuré pour recevoir une première série de données, traiter la première série de données et fournir une deuxième série de données à un ou plusieurs circuits à suivre. Le circuit logique 2 est par exemple un circuit de chiffrement de données. Les algorithmes utilisés dans la fonction logique 2 doivent être protégés des attaques extérieures. Le circuit logique 2 peut être exclusivement en logique numérique ou il peut contenir également quelques fonctionnalités analogiques. Dans un mode de réalisation particulier, le circuit logique 2 peut être un circuit purement analogique.

Si le circuit logique 2 est un circuit asynchrone ce dernier est alors dépourvu d'un signal d'horloge global qui régit ou coordonne les différentes fonctions qui existent à l'intérieur du circuit asynchrone.

Le circuit asynchrone peut être un circuit asynchrone avec des hypothèses temporelles. Cependant, il est particulièrement avantageux de prévoir que le circuit asynchrone est insensible aux délais ou quasi insensible aux délais ce qui permet d'avoir un fonctionnement robuste dans toutes les conditions d'alimentation.

Afin de protéger le circuit logique 2 contre des attaques externes qui cherchent à découvrir les fonctions et/ou les secrets du circuit logique 2 en analysant sa consommation électrique et/ou l'émission d'un rayonnement électromagnétique, le circuit logique 2 est alimenté par un circuit d'alimentation qui est configuré pour appliquer une puissance variable par exemple une tension d'alimentation variable V et/ou un courant d'alimentation variable.

Une alimentation variable V est fournie au circuit logique 2 durant une première période de temps qui est utilisée pour réaliser les fonctions du circuit logique 2, par exemple une fonction de chiffrement de données. Durant cette première période de temps, les caractéristiques électriques de la tension d'alimentation V vont évoluer ce qui va introduire une composante variable dans les mesures faites par des tiers qui étudient la fonction logique 2.

La tension d'alimentation variable V peut être décomposée en l'addition d'une première tension nécessaire au bon fonctionnement du circuit logique 2 et d'une deuxième tension qui comporte la composante variable qui introduit un bruit d'alimentation.

Le circuit d'alimentation comporte au moins un générateur de tension 3 configuré pour délivrer une première tension d'alimentation supérieure à une tension minimale de fonctionnement du premier circuit logique 2. En d'autres termes, le générateur de tension 3 est configuré pour délivrer un niveau d'alimentation minimal, c'est-à-dire une valeur de tension minimale en dessous de laquelle le circuit logique 2 est non fonctionnel ou fonctionne avec une vitesse trop lente pour pouvoir être utilisé. La tension minimale assure que le circuit logique est en mesure de traiter l'information fournie dans une durée prédéfinie.

Le générateur de tension 3 est également configuré pour délivrer une deuxième tension additionnelle variable qui va générer un bruit d'alimentation variable. La deuxième tension variable comporte des caractéristiques électriques qui évoluent durant la première période de temps.

En introduisant un niveau de bruit variable dans l'alimentation du circuit logique 2, le circuit intégré 1 introduit une perturbation qui va modifier le fonctionnement du circuit logique 2 dans sa consommation et dans son rayonnement électromagnétique. Cette perturbation va introduire des modifications dans la puissance instantanée consommée en plus de la consommation instantanée liée au traitement de la première série de données. Il en va de même pour la signature électromagnétique qui comporte une composante liée au traitement des données et une composante liée à la perturbation variable.

Dans un mode de réalisation, le générateur de tension 3 est configuré pour délivrer une tension variable qui comporte au moins une composante fixe, c'est-à-dire une tension fixe définie par sa tension de décalage VO ou tension d'offset, et une composante périodique, c'est-à-dire une tension définie par sa fréquence F, son amplitude VA et sa forme d'onde. Ces deux composantes peuvent être présentes dans une seule composante périodique qui comporte, en plus des caractéristiques précédentes, la tension de décalage VO. Les dispositifs de l'art antérieur ne proposent que la variation de la valeur de la puissance d'alimentation sous la forme d'une succession de paliers comme cela est illustré dans les documents US 6,419,159 et US 2003/0154389. Les inventeurs ont observé que l'utilisation d'une composante périodique avec une amplitude variable et/ou une fréquence variable permet de rendre beaucoup plus complexe les possibilités de détection et de détermination depuis l'extérieur du circuit. La tension d'alimentation évolue entre deux générations successives de nombres.

Le circuit intégré 1 est configuré de manière à faire évoluer au moins une de ces caractéristiques électriques de la tension d'alimentation durant la première période de temps. De manière avantageuse, au moins deux ou trois caractéristiques électriques sont modifiées durant la première période de temps. Encore plus avantageusement, toutes les caractéristiques électriques sont modifiées durant la première période de temps.

Afin de modifier les caractéristiques électriques de la deuxième tension additionnelle variable, le générateur de tension 3 est associé à un générateur de nombres 4 qui est avantageusement un générateur de nombres aléatoires. Le générateur de nombres 4 est configuré pour générer au moins une série de premiers nombres consécutifs durant la première période de temps. Le générateur 4 délivre un nombre après l'autre durant la première période de temps. En alternative, le générateur 4 peut être configuré pour délivrer un premier groupe de nombres simultanément puis un deuxième groupe de nombres simultanément et ainsi de suite durant la première période de temps. Le générateur 4 peut générer plusieurs séries de nombres en parallèle, par exemple une série de premiers nombres et une série de deuxièmes nombres durant la première période de temps. Si le générateur est un générateur de nombres aléatoires 4, ce dernier est configuré pour générer aléatoirement au moins une série de premiers nombres consécutifs durant la première période de temps.

Le générateur de nombres 4 est configuré pour générer périodiquement ou de manière apériodique des nombres durant la première période de temps. De manière avantageuse, le générateur de nombres 4 est non-prédictif dans la durée qui sépare deux nombres consécutifs ou deux séries consécutives de nombres.

Le générateur de nombres 4 délivre des nombres qui sont appliqués avec ou sans transformation sur une ou plusieurs bornes d'entrée du générateur de tension 3. De cette manière, le générateur de tension 3 délivre une deuxième tension additionnelle variable ayant des caractéristiques électriques qui sont fonctions au moins de la première série d'informations consécutives représentatives de la série de premiers nombres. Ainsi, les caractéristiques électriques de la deuxième tension additionnelle évoluent en fonction des nombres générés. Si le générateur de nombres 4 est un générateur de nombres aléatoires, la deuxième tension additionnelle est modifiée aléatoirement dans ses composantes.

Le générateur de tension 3 est configuré pour que la deuxième tension additionnelle comporte une tension fixe qui s'ajoute au niveau d'alimentation minimal. La valeur de cette tension fixe ou tension de décalage VO est définie au moyen d'une première série de tensions de décalage VO comportant plusieurs valeurs différentes de tension de décalage VO. De cette manière, le générateur de tension 3 est configuré de manière à ce que la valeur de la tension de décalage VO soit définie au moins à partir de la série de premiers nombres, sur la première période de temps parmi la première série de tensions de décalage comportant plusieurs valeurs différentes de tension de décalage VO.

Le générateur de tension 3 est configuré pour que la deuxième tension additionnelle comporte une tension périodique qui s'ajoute au niveau d'alimentation minimal. Cette composante de bruit périodique est définie par plusieurs caractéristiques électriques qui vont évoluer dans le temps indépendamment les unes des autres en fonction des nombres générés par le générateur de nombres 4.

Dans un mode de réalisation avantageux, le générateur de tension 3 est configuré pour délivrer une première tension périodique qui est définie par une première fréquence F, une première amplitude VA et une première forme d'onde. La valeur de la première fréquence F est définie par une deuxième série de premières fréquences F comportant plusieurs valeurs différentes de premières fréquences F. La valeur de la première amplitude VA est définie par une troisième série de premières amplitudes VA comportant plusieurs valeurs différentes de premières amplitudes VA.

Le générateur de tension 3 est configuré de manière à ce que la première fréquence F et/ou la première amplitude VA soient définies au moins à partir de la série de premiers nombres, sur la première période de temps parmi la deuxième série de premières fréquences F comportant plusieurs valeurs différentes de premières fréquences F et la troisième série de premières amplitudes VA comportant plusieurs valeurs différentes de premières amplitudes VA.

Dans un premier mode de réalisation, le générateur de tension 3 est configuré pour ne délivrer qu'une seule forme d'onde pour la première tension périodique. La forme d'onde est avantageusement choisie parmi un signal sinusoïdal, un signal carré, un signal triangulaire, un signal trapézoïdal, un signal en dent de scie, un signal exponentiel et un signal logarithmique, mais d'autres formes d'onde sont possibles.

En alternative, le générateur de tension 3 est configuré pour faire évoluer la forme d'onde de la première tension périodique parmi les formes d'onde citées ci-dessus en fonction des nombres générés par le générateur de nombres 4.

Dans un mode de réalisation préférentiel, le générateur de tension 3 est configuré pour délivrer, en plus, une deuxième tension périodique qui est définie par une deuxième fréquence F, une deuxième amplitude VA et une deuxième forme d'onde. Dans cette configuration, il est avantageux de prévoir que le générateur de tension 3 soit également configuré pour faire varier la valeur du déphasage entre la première tension périodique et la deuxième tension périodique lorsque le générateur de tension 3 est configuré pour que la première fréquence F soit égale à la deuxième fréquence F.

De la même manière que pour la première tension périodique, le générateur de tension 3 est configuré de manière à ce que la deuxième fréquence F et/ou la deuxième amplitude VA soit définies au moins à partir de la série de premiers nombres, sur la première période de temps parmi plusieurs deuxièmes fréquences F et deuxièmes amplitudes VA. Les deuxièmes fréquences F peuvent être définies à partir de la deuxième série ou à partir d'une quatrième série différente de la deuxième série. Les deuxième amplitudes VA peuvent être définies à partir de la troisième série ou à partir d'une cinquième série différente de la troisième série.

Dans un mode de réalisation, le générateur de tension 3 est configuré pour ne délivrer qu'une seule forme d'onde pour la première tension périodique ou pour toutes les tensions périodiques. La forme d'onde est avantageusement choisie parmi un signal sinusoïdal, un signal carré, un signal triangulaire, un signal trapézoïdal, un signal en dent de scie, un signal exponentiel et un signal logarithmique.

En alternative, le générateur de tension 3 est configuré pour faire évoluer uniquement la forme d'onde de la première tension périodique parmi les formes d'onde citées ci-dessus en fonction des nombres générés par le générateur de nombres 4. Il est encore possible de prévoir que le générateur de tension 3 soit configuré pour faire évoluer de la même manière la forme d'onde de toutes les tensions périodiques parmi les formes d'onde citées ci-dessus en fonction des nombres générés par le générateur de nombres 4. Enfin, il est avantageux de prévoir que le générateur de tension 3 soit configuré pour faire évoluer indépendamment la forme d'onde des différentes tensions périodiques parmi les formes d'onde citées ci-dessus en fonction des nombres générés par le générateur de nombres 4.

Comme indiqué plus haut, il est avantageux de prévoir que la valeur du déphasage entre la première tension périodique et la deuxième tension périodique puisse évoluer en fonction des nombres générés par le générateur de nombres 4. Le déphasage peut évoluer entre 0 et la formation de deux signaux en opposition de phase. Il est possible de prévoir que la première tension périodique soit en avance ou en retard par rapport à la deuxième tension périodique.

Dans un mode de réalisation avantageux, la première série de tensions de décalage VO comporte au moins une tension nulle et d'autres valeurs. De cette manière, lorsque la tension est nulle, le générateur de tension 3 ne délivre pas la composante de tension fixe. Il est donc possible, durant une partie de la première période de temps, que le générateur de tension 3 ne délivre pas la composante de tension fixe.

Il est également avantageux de prévoir que la deuxième série de premières fréquences F et/ou la troisième série de premières amplitudes VA comporte une valeur nulle ou une autre valeur représentative d'un défaut de délivrance de la première tension périodique. Il peut en être de même pour la deuxième tension périodique.

En plus des caractéristiques électriques citées plus haut, la première tension périodique est définie par un premier rapport cyclique. Il est avantageux de prévoir que le générateur de tension 3 soit configuré pour moduler le premier rapport cyclique de la première tension périodique en fonction des nombres générés par le générateur de nombres 4. En d'autres termes, le générateur de tension 3 est configuré de manière à ce que le premier rapport cyclique soit défini au moins à partir de la série de premiers nombres du générateur de nombres 4, sur la première période de temps parmi plusieurs rapports cycliques différents. Dans un signal périodique, le rapport cyclique correspond au rapport entre la durée du signal à un certain état durant une période sur la durée de cette même période. Par exemple pour un signal carré, le rapport cyclique correspond à la durée à l'état haut ou bas pendant un période sur la durée de la période. Pour un signal sinusoïdal, le rapport cyclique peut correspondre à la durée du signal au-delà de sa valeur moyenne ou en dessous sur la durée de la période.

Les différentes caractéristiques de la deuxième tension additionnelle sont modifiables à la volée, c'est-à-dire pendant que le circuit logique 2 est en cours de fonctionnement de sorte que toutes ces variations apportées sur l'alimentation du circuit logique 2 modifient la consommation instantanée du circuit logique 2. De manière avantageuse, le circuit logique est configuré pour que la modulation de ses conditions d'alimentation se traduise par une modification de sa vitesse de traitement des données fournies et donc sur le temps de traitement des données. Plus la tension est élevée et plus la vitesse de traitement est élevée.

Ainsi, il est plus difficile pour un individu extérieur de rechercher le fonctionnement du circuit logique 2. Au fur et à mesure que le générateur de nombre 4 émet des nombres, le générateur de tension 3 modifie les conditions d'alimentation en fonction des nombres reçus ou en fonction des informations reçues représentatives des nombres générés. Par exemple, le générateur de nombres 4 émet un ou plusieurs nombres environ toutes les microsecondes.

Dans un mode de réalisation particulier, l'information fournie par le générateur de nombres 4 peut être une tension analogique ou une valeur numérique formée par des bits.

Le générateur de nombres 4 est relié à un circuit de traitement 5 qui comporte avantageusement un ou plusieurs registres. Le générateur de nombres 4 est relié à au moins un registre et il fournit une donnée qui correspond à une adresse du registre. Le registre est configuré pour transformer un nombre reçu depuis le générateur de nombres 4 en une adresse d'une zone de mémoire stockant une ou plusieurs caractéristiques électriques de la deuxième tension additionnelle variable.

En fonction de l'information reçue, et donc du registre visé, le circuit de traitement 5 va fournir une seconde information au générateur de tension 3. Cette seconde information correspond à une ou plusieurs caractéristiques électriques de la deuxième tension additionnelle.

Dans un mode de réalisation, la donnée enregistrée dans le registre correspond à une valeur d'une caractéristique électrique, par exemple l'amplitude VA, la fréquence F, le déphasage ou la valeur de la tension de décalage VO. Les paramètres électriques sont modifiés un par un, consécutivement dans le temps et de manière préférentielle les paramètres électriques sont modifiés aléatoirement.

En alternative, la donnée enregistrée dans le registre correspond à un jeu complet des caractéristiques électriques de la deuxième tension additionnelle. Les paramètres électriques sont modifiés par groupes consécutivement et de manière préférentielle aléatoirement.

Dans un premier mode de réalisation particulier, le générateur de nombres 4 est configuré pour délivrer au moins 4096 nombres différents et le registre est configuré pour stocker aux moins 4096 conditions différentes réparties sur les différentes caractéristiques électriques de la deuxième tension additionnelle. La protection est d'autant plus grande que le nombre est élevé. De cette manière, il est possible de former plus de 4096 signaux différents. De manière avantageuse, un signal est codé sur au moins quatre bits pour chaque paramètre modifiable de la tension additionnelle variable ce qui autorise au moins 16 valeurs différentes accessibles pour chaque paramètre. Les inventeurs ont observé qu'en modifiant un seul paramètre de la tension d'alimentation et même aléatoirement, par exemple la valeur de la composante fixe, il est possible de repousser les limites de faisabilité de l'attaque. Après un temps de traitement relativement long, il n'est pas impossible de déterminer le fonctionnement ou les secrets du circuit logique 2. Une situation équivalente peut être obtenue en ne modulant que la fréquence F ou que l'amplitude VA de la tension additionnelle bien que cette modulation soit plus efficace que pour la valeur de la composante fixe.

En modulant la composante fixe et la composante périodique et de préférence au moins deux caractéristiques électriques de la composante périodique, il est plus difficile avec les techniques actuelles de corréler la puissance consommée par le circuit logique 2 et le traitement de l'information par ce même circuit logique 2.

Les inventeurs ont observé que pour accroitre la sécurité du circuit intégré 1, il est particulièrement avantageux que le générateur de nombres 4 et le circuit logique 2 soient protégés physiquement des agressions extérieures. Par exemple, ces deux éléments sont protégés par un bouclier électrique (non représenté) qui arrête le fonctionnement et/ou les secrets du circuit intégré 1 lorsque le bouclier est corrompu. En intégrant ces deux éléments à l'intérieur du circuit intégré 1, il est plus difficile pour un assaillant d'empêcher la modulation des conditions d'alimentation.

Il est avantageux de protéger le circuit de traitement 5 par le bouclier. En effet, ce dernier reçoit les nombres et les transforme en conditions de fonctionnement du générateur de tension 3 pour le signal de bruit.

Il est avantageux de protéger le générateur de tension 3 par le bouclier afin qu'un assaillant ne soit pas en capacité de mesurer précisément la tension délivrée. Dans un mode de réalisation, le circuit de traitement 5 est intégré dans le générateur de tension 3. Cependant, il est également envisageable de dissocier physiquement le générateur de tension 3 et le circuit de traitement 5 pour dissocier les actions et compliquer le travail d'analyse du fonctionnement général du circuit intégré 1.

Il apparait également très avantageux de prévoir que le générateur de tension 3 qui délivre la tension minimale de fonctionnement et la tension additionnelle variable soit alimenté par une source d'alimentation 6 en amont. Le générateur de tension 3 comporte un groupe de connecteurs d'alimentation destinés à être connectés à une source d'alimentation 6 alimentant le générateur de tension 3.

Le générateur de tension 3 est configuré pour délivrer une tension aléatoire alimentant le circuit logique et éventuellement le générateur de nombres 4. La variabilité dans les conditions d'alimentation va moduler le fonctionnement du circuit logique 2 et du générateur de nombres 4 ce qui va introduire en plus en variabilité sur la consommation en courant. Dans ces conditions, il devient particulièrement difficile d'étudier la puissance consommée par la source d'alimentation 6 pour réussir à identifier le fonctionnement du circuit logique 2 et en déduire au moins partiellement son fonctionnement.

De manière particulièrement avantageuse, le générateur de nombres 4 est alimenté par le générateur de tension 3 de manière à ce que la consommation du générateur de nombres 4 vienne perturber la consommation électrique du circuit intégré. Il est alors plus difficile voire impossible de deviner le nombre ou les nombres délivrés par le générateur de nombres 4. Dans la mesure où les conditions d'alimentation sont fluctuantes aux bornes du générateur de nombres 4, il est particulièrement avantageux de prévoir que le générateur de nombres 4 soit réalisé en logique asynchrone. Il est également particulièrement avantageux de prévoir que la fréquence d'émission des nombres par le générateur 4 soit définie au moins en partie par la tension présente aux bornes du générateur 4. De cette manière, en modulant la tension aux bornes du générateur de nombres 4 au moyens des conditions d'alimentation fournies par le générateur de tension 3, il est possible de faire varier la durée qui sépare deux émissions consécutives de nombres en fonction au moins de la valeur du précédent nombre émis.

Comme indiqué précédemment, la vitesse de traitement des données dans le module logique 2 est en partie dépendante de ses conditions d'alimentation. En suivant la vitesse d'exécution du circuit logique, il est possible de déduire grossièrement les conditions d'alimentation ce qui fournit une première indication. Afin d'empêcher une éventuelle corrélation, il est avantageux d'utiliser un circuit logique 2 qui est muni d'un générateur de délai également appelé circuit d'insertion de délai. Le générateur de délai est configuré pour dissocier la durée totale du traitement d'une donnée par le circuit logique 2 et les conditions d'alimentation du circuit logique 2.

Les délais peuvent être aléatoires ou la durée des délais peut être fonction des conditions d'alimentation. De manière préférentielle, la durée du délai ajoutée est aléatoire et non-corrélée à la tension moyenne aux bornes du circuit logique 2.

Le circuit d'insertion d'un délai peut comporter une ou plusieurs bascules RS associées à des portes logiques NON-ET comme cela est proposé dans le document US 7205794. Il est encore possible de prévoir que le circuit d'insertion de délai soit configuré pour sauter des cycles d'horloges comme cela est proposé dans le document US 6327661 lorsque le circuit logique est un circuit synchrone.

Dans un autre mode de réalisation particulier, le circuit d'insertion de délai peut comporter entre l'entrée I et la sortie O de signal, une porte de Muller et une pluralité de circuits de retard connectés en série à une sortie de la porte de Muller. Chaque circuit de retard comporte une sortie connectée à une entrée correspondante d'un circuit de multiplexage. Une sortie du circuit de multiplexage forme la sortie du circuit d'insertion de délai. La porte de Muller comporte une entrée formant l'entrée du circuit d'insertion de délai et une entrée connectée à la sortie du dernier circuit de retard par l'intermédiaire d'une porte inverseuse. Un tel mode de réalisation est décrit dans le document US 2009-0307516.

Dans un mode de réalisation avantageux car facile à mettre en œuvre, le générateur de tension 3 comporte un régulateur de tension à chute faible également appelé LDO pour Low-Dropout regulator ou un hacheur de type DC-DC également appelé hacheur continu-continu qui délivre au moins une partie de la tension alimentant le circuit logique 2.

Il est particulièrement avantageux d'utiliser un LDO car ce régulateur en tension continu et linéaire est en mesure de réguler sa tension de sortie même lorsque la demande en tension est très proche de ce qui peut être fourni. Les LDO sont généralement associés à un bruit d'alimentation faible ce qui est un désavantage dans l'application actuelle. Afin de pouvoir délivrer la tension variable recherchée, un modificateur de tension est disposé en sortie du LDO.

De manière avantageuse, le générateur de tension 3 comporte un régulateur de tension à chute faible muni d'un premier transistor 7. Le premier transistor possède une électrode d'entrée destinée à être reliée à une source d'alimentation 6 et une électrode de sortie connectée pour alimenter le premier module logique 2. Le premier transistor 7 possède une électrode de commande connectée à la sortie d'un amplificateur 8 qui délivre un signal périodique. L'amplificateur 8 possède une première borne d'entrée recevant un signal périodique depuis un générateur de signal périodique qui est configuré pour moduler une fréquence dudit signal périodique au moyen d'une première information NF. Cette première information NF est formée par un nombre du générateur 4 ou elle est représentative d'un nombre du générateur 4.

Le générateur de signal périodique est configuré pour moduler une amplitude du signal périodique au moyen d'une deuxième information NA. Cette deuxième information NA est formée par un nombre du générateur 4 ou elle est représentative d'un nombre du générateur 4.

L'amplificateur 8 possède une deuxième borne d'entrée recevant une tension fonction d'une troisième information NO. Cette troisième information NO est formée par un nombre du générateur 4 ou elle est représentative d'un nombre du générateur 4. La troisième information permet de moduler la tension de décalage du signal délivré par le premier transistor 7.

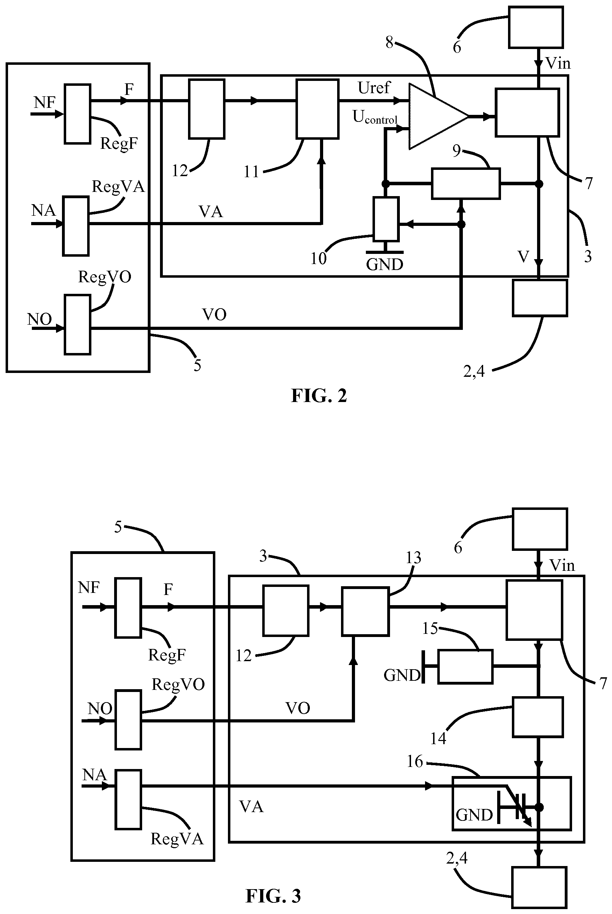

Dans le mode de réalisation plus particulier et illustré à la figure 2, le générateur de tension 3 comporte un premier transistor 7 qui est avantageusement un transistor de puissance. Le premier transistor 7 reçoit sur une première électrode la tension d'alimentation Vin en provenance de la source d'alimentation 6. Le premier transistor 7 délivre en sortie la tension d'alimentation V qui alimente le circuit logique 2 et avantageusement le générateur 4.

L'électrode de commande du premier transistor 7 est reliée à la borne de sortie d'un amplificateur 8. De cette manière, en fonction du signal émis par la borne de sortie de l'amplificateur 8, le premier transistor 7 délivre une tension V plus ou moins importante sur sa borne de sortie.

L'amplificateur 8 comporte une première borne d'entrée qui reçoit une tension périodique $U_{ref}$ ou une information relative à une tension périodique. L'amplificateur 8 comporte une deuxième borne d'entrée qui reçoit la tension de commande $U_{control}$ qui définit la valeur de la tension de décalage. Par exemple, la tension $U_{control}$ est fournie par un pont diviseur formé par une première résistance variable 9 et une deuxième résistance variable 10. Cet ensemble de deux résistances variables en série est connecté d'un côté à la borne de sortie du premier transistor 7 et de l'autre côté à une tension de référence, par exemple la masse GND sur la figure 2.

Le nœud commun aux deux résistances variables 9 et 10 délivre la tension $U_{control}$ et est connecté sur la deuxième borne d'entrée de l'amplificateur 8.

Les deux résistances variables possèdent chacune une électrode de commande qui est configurée pour faire varier la valeur de la résistance en fonction du signal appliqué sur l'électrode de commande.

Les deux électrodes de commande reçoivent le signal VO qui modifie la valeur de la résistance électrique. Le signal VO provient du circuit de traitement 5 et définit la valeur d'une composante de tension fixe délivrée sur le signal de sortie.

Dans le mode de réalisation illustré, le signal VO est délivré par un registre RegVO à partir d'une information préalable NO qui peut provenir du circuit de traitement 5 ou du générateur de nombres 4 selon les modes de réalisation.

La tension $U_{ref}$, présente sur la première borne d'entrée de l'amplificateur 8, est délivrée par la borne de sortie d'un circuit limiteur dérivateur 11. Le circuit limiteur dérivateur 11 délivre sur sa borne de sortie un signal périodique.

Le circuit limiteur dérivateur 11 possède une première borne d'entrée qui reçoit un premier signal périodique de fréquence F. Le circuit limiteur dérivateur 11 possède une deuxième borne d'entrée qui reçoit un signal VA. Le circuit limiteur dérivateur 11 est configuré de sorte que la valeur du signal VA définisse l'amplitude de la composante périodique délivrée sur sa borne de sortie, c'est-à-dire l'amplitude du signal $U_{ref}$. De cette manière, si la valeur du signal VA change à chaque période, l'amplitude du signal $U_{ref}$ est modifiée à chaque période mais la forme générale du signal est conservée. Il en va de même pour la composante périodique de la tension V.

Un générateur de signal périodique 12 est utilisé et la borne de sortie de ce générateur 12 est connectée à la borne d'entrée du circuit limiteur dérivateur 11. Le générateur de signal périodique 12 possède une borne d'entrée qui reçoit au moins un signal F. Le générateur de signal périodique 12 est configuré pour que la valeur de la fréquence du signal périodique délivré évolue en fonction de la valeur du signal F reçu sur sa borne d'entrée.

Un mode de réalisation simple du générateur de signal périodique 12 peut être un VCO pour Voltage Controlled Oscillator ou oscillateur commandé en tension qui permet de générer un signal périodique dont la fréquence varie en fonction de la valeur de la tension appliquée sur sa borne d'entrée, c'est-à-dire en fonction du signal F.

Bien entendu, le générateur de signal périodique 12 peut être plus complexe de manière à pouvoir fournir des formes d'onde différentes en fonction de la valeur du nombre émis par le générateur de nombres 4.

Comme pour le signal VO, le mode de réalisation illustré à la figure 2 montre que les signaux VA et F proviennent respectivement de deux registres distincts RegVA et RegF qui reçoivent préalablement les signaux NA et NF. Ces signaux NA et NF peuvent provenir du circuit de traitement 5 ou du générateur de nombres 4.

Par exemple, il est possible qu'un des signaux NF, NA et NO provienne du générateur de nombres 4 et que les deux autres proviennent du circuit de traitement 5. Il est encore possible que le même signal en provenance du générateur de nombres 4 soit appliqué sur les différents registres de sorte que l'émission d'un nombre par le générateur de nombres 4 se traduise par une modification des conditions sur les différents paramètres de la tension additionnelle variable.

Il est encore possible de prévoir que les registres possèdent des données identiques de sorte que deux informations différentes émises par le générateur de nombres 4 ne se traduisent pas par une modification de tous les paramètres de la tension additionnelle variable. En d'autres termes, un registre peut posséder au moins deux données identiques dans sa mémoire.

Ce qui est indiqué dans le mode de réalisation du générateur de tension 3 avec un LDO est également vrai dans le mode de réalisation à suivre pour un générateur de tension 3 qui comporte un Hacheur DC-DC ou convertisseur continu-continu.

Un mode de réalisation d'un générateur de tension 3 muni d'un Hacheur DC-DC est illustré à la figure 3.

Le générateur de tension 3 comporte un hacheur continu-continu muni d'un premier transistor 7 ayant une borne d'entrée destinée à être reliée à une source d'alimentation 6 et une borne de sortie connectée pour alimenter le premier module logique 2. Le premier transistor 7 possède une électrode de commande connectée à la sortie d'un générateur de signal périodique qui est configuré pour moduler une fréquence dudit signal périodique au moyen d'une première information NF et une tension moyenne dudit signal périodique au moyen d'une deuxième information NO. Les première et deuxième informations peuvent être des nombres émis par le générateur ou des informations représentatives de ces nombres. La borne de sortie du premier transistor 7 est reliée au premier module logique 2 par l'intermédiaire d'un filtre 16 configuré pour moduler l'amplitude de la tension délivrée par le premier transistor 8 au moyen d'une troisième information NA reçue sur une borne de commande du filtre 16. La troisième information peut être un nombre émis pas le générateur 4 ou une information représentative de ce nombre.

Dans un mode de réalisation plus particulier illustré à la figure 3, le générateur de tension 3 comporte un premier transistor 7 qui est avantageusement un transistor de puissance. Le premier transistor 7 reçoit, sur une première électrode, la tension d'alimentation Vin en provenance de la source d'alimentation 6. Le premier transistor 7 délivre, en sortie, le signal de sortie qui est destiné à alimenter le circuit logique 2.

L'électrode de commande du premier transistor 7 est reliée à la borne de sortie d'un générateur de signal périodique 13. De cette manière, en fonction du signal périodique émis par la borne de sortie du générateur 13, le transistor 7 délivre une tension périodique sur sa borne de sortie.

Le générateur 13 comporte une première borne d'entrée qui reçoit un signal périodique et préférentiellement un signal alternatif périodique. Le générateur 13 comporte une deuxième borne d'entrée qui reçoit un signal VO. Le générateur 13 est configuré pour moduler la valeur du rapport cyclique du signal périodique présent sur la première borne d'entrée en fonction de la valeur du signal VO présent sur la deuxième borne d'entrée.

Dans cette configuration, en modulant la valeur du rapport cyclique, le générateur de tension 3 est en mesure de moduler la valeur moyenne du signal délivré par le générateur 13 ce qui correspond à la tension de décalage VO de la composante de tension fixe qui alimente le circuit logique 2.

Dans le mode de réalisation illustré, le signal VO est délivré par un registre RegVO à partir d'une information préalable NO qui peut provenir du circuit de traitement 5 ou du générateur de nombres 4 selon les modes de réalisation.

Le générateur 13 modulant la valeur du rapport cyclique possède une première borne d'entrée qui reçoit un premier signal périodique de fréquence F. Un générateur de signal périodique 12 est utilisé pour générer ce signal et la borne de sortie de ce générateur 12 est connectée à la borne d'entrée du générateur 13 modulant la valeur du rapport cyclique.

Le générateur de signal périodique 12 possède une borne d'entrée qui reçoit au moins un signal F. Le générateur de signal périodique 12 est configuré pour que la valeur de la fréquence évolue en fonction de la valeur du signal F reçu sur sa borne d'entrée.

Un mode de réalisation simple du générateur de signal périodique 12 peut être un VCO pour Voltage Controlled Oscillator ou oscillateur commandé en tension qui permet de générer un signal périodique dont la fréquence F varie en fonction de la valeur de la tension appliquée sur sa borne d'entrée.

Bien entendu, le générateur de signal périodique 12 peut être plus complexe de manière à pouvoir fournir des formes d'onde différentes en fonction de la valeur du nombre émis par le générateur de nombres 4. Cependant, l'utilisation de cette fonctionnalité est moins intéressante que dans le mode de réalisation précédent.

La borne de sortie du premier transistor 7 est connectée à une bobine 14 de manière à mettre en forme le signal en sortie du transistor 7.

La connexion entre le premier transistor 7 et la bobine 14 est également reliée à une première borne d'une diode 15. La deuxième borne de la diode 15 est connectée à une tension de référence, par exemple la masse GND sur la figure 3.

Au moyen de la diode 15 et de l'inductance 14, le signal délivré par le premier transistor 7 est modifié et mis en forme. En sortie de l'inductance 14, le signal délivré est un signal périodique qui comporte une composante fixe définie par le rapport cyclique et donc par le signal VO et une composant périodique dont la fréquence F est définie par le générateur de signal périodique 12 et donc par la valeur du signal F.

Si le transistor 7 délivre un signal de type carré sur sa borne de sortie, l'inductance 14 et la diode 15 réalisent la mise en forme du signal par exemple sous la forme d'une fonction d'onde logarithmique. Si le transistor 7 délivre un signal différent d'un signal carré, la forme de la fonction d'onde sera différente. Il est alors possible de changer la forme de la fonction d'onde en changeant légèrement le mode de fonctionnement du transistor 7.

L'amplitude du signal délivré par l'inductance 14 est ensuite modifiée par le filtre 16 qui est configuré pour faire varier la valeur de l'amplitude.

La borne de sortie de l'inductance 14 est connectée à une première entrée d'un filtre 16. Le filtre 16 possède une deuxième entrée qui reçoit le signal VA. Le filtre 16 possède une borne de sortie qui alimente le circuit logique 2. A titre d'exemple, le filtre 16 est un filtre de type passe-bas, par exemple un filtre LC qui comporte un condensateur. Un mode de réalisation particulier est illustré à la figure 3. Dans cette configuration particulière, le filtre 16 comporte un condensateur dont la valeur de capacité électrique est variable. Le filtre 16 peut être formé par un condensateur ayant une borne connectée à l'inductance et au circuit logique 2 ou au générateur de nombres et une borne connectée à une tension de référence, par exemple la masse. La valeur du signal VA est appliquée sur la borne de commande du condensateur afin de moduler sa capacité électrique et donc modifier son comportement.

Le filtre 16 est configuré de manière à ce que la valeur du signal VA appliqué sur la deuxième entrée module la valeur de l'amplitude de la composante périodique du signal délivré par l'inductance 14.

En modifiant la valeur du signal VA, il est possible de modifier la valeur de l'amplitude de la composante périodique du signal V alimentant le circuit logique 2 et éventuellement le générateur de nombres 4.

Cette configuration est particulièrement avantageuse, car le filtre 16 qui délivre la tension qui alimente le circuit logique 2 n'a pas besoin d'être très performant. Des contraintes moindres sur les performances du filtre 16 permettent de former un filtre plus compact et les éventuels aléas de fabrication rajoutent un aléa dans la composante variable de l'alimentation du circuit logique 2.

Cette configuration permet au moyen des signaux F, VO et VA de moduler facilement les différentes composantes de la tension d'alimentation.

Dans un mode de réalisation avantageux, le générateur de nombres 4 est réalisé en logique asynchrone et préférentiellement en logique asynchrone insensible aux délais. De cette manière, les performances du générateur de nombres 4 ne sont pas perturbées par les variations introduites par le générateur de tension 3 ce qui améliore la robustesse du circuit intégré 1. Il est même avantageux d'alimenter le générateur de nombres 4 avec le générateur de tension 3 car cela introduit un aléa supplémentaire dans le fonctionnement du générateur de nombres 4. Cet aléa intervient dans la durée qui sépare l'émission de deux nombres consécutifs ou deux séries consécutives de nombres et non dans la robustesse du générateur à fournir des nombres.

Si le générateur de nombres 4 et le circuit logique 2 sont réalisés en logique asynchrone et préférentiellement en logique asynchrone insensible aux délais, le circuit intégré 1 est dépourvu d'un signal d'horloge qui assure la synchronisation du circuit logique 2 et du générateur de nombres 4.

Le circuit intégré 1 possède préférentiellement un circuit logique asynchrone ce qui facilite la réalisation du circuit intégré. Il est néanmoins possible d'utiliser un circuit logique synchrone.

Lorsque le circuit logique est un circuit synchrone comme cela est illustré à la figure 4, les fluctuations des conditions d'alimentation ont une influence sur la synchronisation des fonctions.

Le circuit logique synchrone 2 est configuré de manière à présenter un fonctionnement insensible aux fluctuations de la tension d'alimentation ce qui implique également de prévoir un fonctionnement insensible aux fluctuations de la fréquence de l'horloge de synchronisation du circuit car cette dernière est alimentée par le générateur de tension 3.

Le circuit logique 2 comporte un générateur d'horloge 17 qui est configuré pour générer un signal d'horloge de synchronisation des différentes fonctions du circuit logique 2. En alternative, le générateur d'horloge 17 est dissocié du circuit logique 2.

Le générateur d'horloge 17 est relié au générateur de nombres 4 afin de recevoir les nombres émis par le générateur 4 et/ou la première série d'informations consécutives représentatives de la série de premiers nombres. Le générateur d'horloge 17 est configuré pour moduler la fréquence du signal d'horloge en fonction des nombres émis par le générateur de nombres 4 de manière à tenir compte des évolutions de la tension qui alimente le circuit logique 2.

Dans un cas de figure, le générateur d'horloge 17 reçoit directement les nombres émis par le générateur de nombres 4. En alternative, le générateur d'horloge 17 reçoit les informations en provenance du circuit de traitement soit directement depuis le circuit de traitement 5 soit depuis le générateur de tension 3. Il est encore possible de prévoir que le générateur de tension 3 ou le circuit de traitement 5 fournisse une information additionnelle indiquant la fréquence à délivrer par le générateur d'horloge 17.

A titre d'exemple, il est possible d'adapter facilement la fréquence du signal d'horloge en utilisant une pluralité d'inverseurs montés en série, les inverseurs étant un nombre impair, par exemple au moins trois inverseurs. Le dernier inverseur de la série délivre le signal d'horloge. La sortie du dernier inverseur est connectée à l'entrée du premier inverseur.

La modulation de la fréquence d'horloge peut être obtenue très facilement en faisant évoluer la tension d'alimentation des inverseurs. Dans cette configuration, il apparait que la fréquence d'oscillation de l'horloge est directement fonction du nombre d'inverseurs avec une formule de la forme

$$F_{osc}= 0,5*T_d*N$$

avec

$$T_d=K*V_{dd}/(V_{dd}-V_{th})^2$$

N : le nombre d'inverseurs
$V_{dd}$ : la tension d'alimentation des inverseurs
$V_{th}$ : la tension de seuil des transistors
K : un constante représentative de la technologie utilisée pour former l'inverseur.

Il est donc possible de lier facilement la fréquence du signal d'horloge aux conditions d'alimentation.

Les dispositifs et procédés de l'art antérieur proposent de faire varier un seul paramètre d'alimentation en fonction d'un nombre généré aléatoirement. Si le générateur de nombres aléatoire est défaillant et n'est pas parfaitement aléatoire, si une modification de son environnement extérieur permet de générer des nombres de manière moins aléatoire et/ou si l'assaillant est en mesure de déterminer/deviner la valeur du nombre, il est alors possible de tester le circuit pour une valeur fixe ou quasi-fixe du nombre aléatoire. Les conditions du circuit sont alors identiques entre les différents essais et il est possible d'attaquer un circuit qui se trouve toujours dans les mêmes conditions.

Selon la même logique, lorsqu'un circuit est alimenté avec une tension purement sinusoïdale, il est intéressant d'attaquer le circuit toujours au même moment de la sinusoïde de manière à s'affranchir de la perturbation. Cette méthode d'attaque est facilitée par la progression du « machin learning » qui facilite la détection d'une alimentation de type sinusoïdale et qui permet d'attaquer le circuit toujours au même moment de la sinusoïde d'alimentation. Il est alors possible de réaliser de très nombreuses attaques et d'observer les résultats pour en déduire des tendances et deviner les fonctionnalités destinées à être cachées.

Au contraire, selon l'invention, plusieurs paramètres des conditions d'alimentation évoluent dans le temps de sorte qu'il est très difficile voire quasiment impossible d'attaquer un circuit qui possède une tension périodique avec une première fréquence F et une première amplitude VA en association avec une valeur tension fixe définie par une valeur de tension de décalage VO, ces trois paramètres pouvant varier en fonction des nombres aléatoires.

## Revendications

**1.** Circuit électronique (1) comportant :

- un premier module logique (2) configuré pour réaliser une première fonction,
- un générateur de nombres (4) configuré pour générer au moins une série de premiers nombres consécutifs sur une première période de temps,
- un générateur de tension (3) relié au générateur de nombres (4) de manière à recevoir une première série d'informations consécutives représentatives de la série de premiers nombres, le générateur de tension (3) étant configuré pour alimenter le premier module logique (2) avec une tension d'alimentation comportant une première tension d'alimentation supérieure à une tension minimale de fonctionnement du premier module logique (2) et une deuxième tension additionnelle variable ayant des caractéristiques électriques fonctions au moins de la première série d'informations consécutives,

le circuit électronique étant **caractérisé en ce que** le générateur de tension (3) est configuré de manière à délivrer une deuxième tension additionnelle variable qui comporte au moins :

- une composante représentative d'une tension fixe définie par une valeur de tension de décalage (VO),
- une composante représentative d'une première tension périodique définie au moins par une première fréquence (F) et une première amplitude (VA),

et **en ce que** le générateur de tension (3) est configuré de manière à ce que la valeur de la tension de décalage (VO), la première fréquence (F) et/ou la première amplitude (VA) soient définies au moins à partir de la série de premiers nombres, sur la première période de temps parmi une première série de tensions de décalage comportant plusieurs valeurs différentes de tensions de décalage (VO), une deuxième série de premières fréquences (F) comportant plusieurs valeurs différentes de premières fréquences (F) et une troisième série de premières amplitudes (VA) comportant plusieurs valeurs différentes de premières amplitudes (VA).

**2.** Circuit électronique (1) selon la revendication 1, dans lequel le générateur de tension (3) est configuré de manière à délivrer la deuxième tension additionnelle variable qui comporte, en plus, une composante représentative d'une deuxième tension périodique définie au moins par une deuxième fréquence (F) et une deuxième amplitude (VA) et dans lequel le générateur de tension (3) est configuré de manière à ce que la deuxième fréquence (F) et/ou la deuxième amplitude (VA) soient définies au moins à partir de la série de premiers nombres, sur la première période de temps parmi plusieurs deuxièmes fréquences (F) et deuxièmes amplitudes (VA).

**3.** Circuit électronique (1) selon la revendication 2, dans lequel le générateur de tension (3) est configuré de manière à ce que la composante représentative de la première tension périodique présente un déphasage avec la composante représentative de la deuxième tension périodique et dans lequel le générateur de tension (3) est configuré de manière à ce que le déphasage soit défini au moins à partir de la série de premiers nombres, sur la première période de temps parmi plusieurs déphasages.

**4.** Circuit électronique (1) selon l'une quelconque des revendications 1 à 3, dans lequel le générateur de tension (3) est configuré pour délivrer une composante représentative de la première tension périodique qui présente une première forme d'onde différente d'une deuxième forme d'onde de la composante représentative de la deuxième tension périodique, la première forme d'onde et la deuxième forme d'onde étant avantageusement choisies parmi un signal sinusoïdal, un signal carré, un signal triangulaire, un signal trapézoïdal, un signal en dent de scie, un signal exponentiel et un signal logarithmique.

**5.** Circuit électronique (1) selon l'une quelconque des revendications 1 à 4, dans lequel le générateur de tension (3) est configuré pour délivrer une composante représentative de la première tension périodique qui présente un premier rapport cyclique et dans lequel le générateur de tension (3) est configuré de manière à ce que le premier rapport cyclique soit défini au moins à partir de la série de premiers nombres, sur la première période de temps parmi plusieurs rapports cycliques différents.

6. Circuit électronique (1) selon l'une quelconque des revendications 1 à 5, dans lequel la première série de tensions de décalage comporte une valeur nulle ou la troisième série de premières amplitudes (VA) comporte une valeur nulle.

7. Circuit électronique (1) selon l'une quelconque des revendications 1 à 6, dans lequel le générateur de nombres (4) est alimenté par le générateur de tension (3) et dans lequel la première tension d'alimentation est supérieure à une tension minimale de fonctionnement du générateur de nombres (4).

8. Circuit électronique (1) selon l'une quelconque des revendications précédentes, dans lequel le générateur de nombres (4) est relié à un registre (5), le registre (5) étant configuré pour transformer un nombre reçu depuis le générateur de nombres (4) en une adresse d'une zone de mémoire stockant une ou plusieurs des caractéristiques électriques de la deuxième tension additionnelle variable.

9. Circuit électronique (1) selon l'une quelconque des revendications précédentes, dans lequel le générateur de nombres (4) est un générateur de nombres aléatoires.

10. Circuit électronique (1) selon l'une quelconque des revendications précédentes, dans lequel le générateur de nombres (4) est réalisé en logique asynchrone et préférentiellement en logique asynchrone insensible aux délais ou quasi-insensible aux délais.

11. Circuit électronique (1) selon l'une quelconque des revendications précédentes, dans lequel le générateur de nombres (4) est configuré pour que la durée séparant l'émission de deux nombres consécutifs soit fonction des conditions d'alimentation à ses bornes d'alimentation.

12. Circuit électronique (1) selon l'une quelconque des revendications précédentes, dans lequel le premier module logique (2) est muni d'un générateur de délai configuré pour insérer un délai dans le traitement de données par le premier module logique (2) de manière à dissocier la durée totale de traitement de ladite donnée et les conditions d'alimentation du premier module logique (2).

13. Circuit électronique (1) selon l'une quelconque des revendications précédentes, comportant un générateur d'horloge configuré pour générer un signal d'horloge, le générateur d'horloge étant relié au générateur de nombres et/ou au générateur de tension de manière à recevoir une information relative aux nombres générés par le générateur de nombres et adapter la fréquence du signal d'horloge aux conditions d'alimentation du circuit logique synchrone, le circuit logique étant un circuit synchrone synchronisé par ledit signal d'horloge.

14. Circuit électronique (1) selon l'une quelconque des revendications précédentes, dans lequel le générateur de tension (3) comporte un régulateur de tension à chute faible muni d'un premier transistor (7) ayant une borne d'entrée destinée à être reliée à une source d'alimentation (6) et une borne de sortie connectée pour alimenter le premier module logique (2), le premier transistor (7) possédant une électrode de commande connectée à la sortie d'un amplificateur (8), l'amplificateur (8) possédant une première borne d'entrée recevant un signal périodique depuis un générateur de signal périodique (11, 12) configuré pour moduler une fréquence dudit signal périodique au moyen d'une première information (NF) reçue sur une première borne d'entrée et une amplitude dudit signal périodique au moyen d'une deuxième information (NA) reçue sur une deuxième borne d'entrée, l'amplificateur (8) possédant une deuxième borne d'entrée recevant une tension depuis un fournisseur de tension (9, 10), le fournisseur de tension (9, 10) étant configuré pour moduler la valeur de la tension délivrée en fonction d'une troisième information (VO).

15. Circuit électronique (1) selon l'une quelconque des revendications 1 à 13, dans lequel le générateur de tension (3) comporte un hacheur continu-continu muni d'un premier transistor (7) ayant une borne d'entrée destinée à être reliée à une source d'alimentation (6) et une borne de sortie connectée pour alimenter le premier module logique (2), le premier transistor (7) possédant une électrode de commande connectée à la sortie d'un générateur de signal périodique (13, 12) configuré pour moduler une fréquence dudit signal périodique au moyen d'une première information (NF) reçue sur une première borne et une tension moyenne dudit signal périodique au moyen d'une deuxième information (NO) reçue sur une deuxième borne, la borne de sortie du premier transistor (7) étant connectée au premier module logique (2) par l'intermédiaire d'une inductance (14) et d'un filtre (16) configuré pour moduler l'amplitude de la tension délivrée par le premier transistor (7) au moyen d'une troisième information (NA) reçue sur une borne de commande du filtre (16).

**Patentansprüche**

1. Elektronische Schaltung (1), umfassend:

- ein erstes Logikmodul (2), das konfiguriert ist, um eine erste Funktion auszuführen,
- einen Zahlengenerator (4), der konfiguriert ist, um mindestens eine Reihe von ersten aufeinander folgenden Zahlen für einen ersten Zeitraum zu erzeugen,
- einen Spannungsgenerator (3), der mit dem Zahlengenerator (4) derart verbunden ist, um eine erste Reihe von aufeinander folgenden Informationen zu empfangen, die für die Reihe von ersten Zahlen repräsentativ sind, wobei der Spannungsgenerator (3) konfiguriert ist, um das erste Logikmodul (2) mit einer Versorgungsspannung zu speisen, die eine erste Versorgungsspannung, die größer als eine minimale Betriebsspannung des ersten Logikmoduls (2) ist, und eine zweite variable Zusatzspannung mit elektrischen Eigenschaften aufweist, die mindestens von der ersten Reihe von fortlaufenden Informationen abhängig sind,

wobei die elektronische Schaltung **dadurch gekennzeichnet ist, dass** der Spannungsgenerator (3) derart konfiguriert ist, um eine zweite variable Zusatzspannung bereitzustellen, die mindestens aufweist:

- eine Komponente, die für eine feste Spannung repräsentativ ist, die durch einen Offsetspannungswert (VO) definiert ist,
- eine Komponente, die für eine erste periodische Spannung repräsentativ ist, die mindestens durch eine erste Frequenz (F) und eine erste Amplitude (VA) definiert ist,

und dadurch, dass der Spannungsgenerator (3) derart konfiguriert ist, dass der Wert der Offsetspannung (VO), die erste Frequenz (F) und/oder die erste Amplitude (VA) mindestens ausgehend von der Reihe von ersten Zahlen für den ersten Zeitraum unter einer ersten Reihe von Offsetspannungen, die mehrere verschiedene Werte von Offsetspannungen (VO) aufweist, einer zweiten Reihe von ersten Frequenzen (F), die mehrere verschiedene Werte von ersten Frequenzen (F) aufweist, und einer dritten Reihe von ersten Amplituden (VA), die mehrere verschiedene Werte von ersten Amplituden (VA) aufweist, definiert sind.

**2.** Elektronische Schaltung (1) nach Anspruch 1, wobei der Spannungsgenerator (3) derart konfiguriert ist, um die zweite variable Zusatzspannung bereitzustellen, die ferner eine Komponente aufweist, die für eine zweite periodische Spannung repräsentativ ist, die mindestens durch eine zweite Frequenz (F) und eine zweite Amplitude (VA) definiert ist, und wobei der Spannungsgenerator (3) derart konfiguriert ist, dass die zweite Frequenz (F) und/oder die zweite Amplitude (VA) mindestens ausgehend von der Reihe von ersten Zahlen für den ersten Zeitraum unter mehreren zweiten Frequenzen (F) und zweiten Amplituden (VA) definiert ist/sind.

**3.** Elektronische Schaltung (1) nach Anspruch 2, wobei der Spannungsgenerator (3) derart konfiguriert ist, dass die Komponente, die für die erste periodische Spannung repräsentativ ist, eine Phasenverschiebung mit der Komponente aufweist, die für die zweite periodische Spannung repräsentativ ist, und wobei der Spannungsgenerator (3) derart konfiguriert ist, dass die Phasenverschiebung mindestens ausgehend von der Reihe von ersten Zahlen für den ersten Zeitraum unter mehreren Phasenverschiebungen definiert ist.

**4.** Elektronische Schaltung (1) nach einem der Ansprüche 1 bis 3, wobei der Spannungsgenerator (3) konfiguriert ist, um eine Komponente bereitzustellen, die für die erste periodische Spannung repräsentativ ist, die eine erste Wellenform aufweist, die sich von einer zweiten Wellenform der Komponente unterscheidet, die für die zweite periodische Spannung repräsentativ ist, wobei die erste Wellenform und die zweite Wellenform vorteilhafterweise ausgewählt sind aus einem sinusförmigen Signal, einem Rechtecksignal, einem Dreieckssignal, einem trapezförmigen Signal, einem Sägezahnsignal, einem exponentiellen Signal und einem logarithmischen Signal.

**5.** Elektronische Schaltung (1) nach einem der Ansprüche 1 bis 4, wobei der Spannungsgenerator (3) konfiguriert ist, um eine Komponente bereitzustellen, die für die erste periodische Spannung repräsentativ ist, die einen ersten Tastgrad aufweist, und wobei der Spannungsgenerator (3) derart konfiguriert ist, dass der erste Tastgrad mindestens ausgehend von der Reihe von ersten Zahlen für den ersten Zeitraum unter mehreren verschiedenen Tastgraden definiert ist.

**6.** Elektronische Schaltung (1) nach einem der Ansprüche 1 bis 5, wobei die erste Reihe von Offsetspannungen einen Nullwert aufweist oder die dritte Reihe von ersten Amplituden (VA) einen Nullwert aufweist.

**7.** Elektronische Schaltung (1) nach einem der Ansprüche 1 bis 6, wobei der Zahlengenerator (4) vom Spannungsgenerator (3) gespeist wird und wobei die erste Versorgungsspannung höher als eine minimale Betriebsspannung des Zahlengenerators (4) ist.

**8.** Elektronische Schaltung (1) nach einem der vorhergehenden Ansprüche, wobei der Zahlengenerator (4) mit einem Register (5) verbunden ist, wobei das Register (5) konfiguriert ist, um eine vom Zahlengenerator (4) empfangene Zahl in eine Adresse eines Speicherbereichs umzuwandeln, der eine oder mehrere der elektrischen Eigenschaften der zweiten variablen Zusatzspannung speichert.

**9.** Elektronische Schaltung (1) nach einem der vorhergehenden Ansprüche, wobei der Zahlengenerator (4) ein Zufallszahlengenerator ist.

**10.** Elektronische Schaltung (1) nach einem der vorhergehenden Ansprüche, wobei der Zahlengenerator (4) in Asynchronlogik und vorzugsweise in Asynchronlogik erstellt ist, die unempfindlich gegenüber Verzögerungen oder nahezu unempfindlich gegenüber Verzögerungen ist.

**11.** Elektronische Schaltung (1) nach einem der vorhergehenden Ansprüche, wobei der Zahlengenerator (4) konfiguriert ist, damit die Zeitspanne zwischen dem Senden von zwei aufeinander folgenden Zahlen von den Stromversorgungsbedingungen an seinen Stromversorgungsklemmen abhängig ist.

**12.** Elektronische Schaltung (1) nach einem der vorhergehenden Ansprüche, wobei das erste Logikmodul (2) mit einem Verzögerungsgenerator versehen ist, der konfiguriert ist, um eine Verzögerung in die Datenverarbeitung durch das erste Logikmodul (2) derart einzufügen, um die Gesamtdauer der Verarbeitung des Datums und die Stromversorgungsbedingungen des ersten Logikmoduls (2) zu trennen.

**13.** Elektronische Schaltung (1) nach einem der vorhergehenden Ansprüche, umfassend einen Taktgenerator, der konfiguriert ist, um ein Taktsignal zu erzeugen, wobei der Taktgenerator mit dem Zahlengenerator und/oder dem Spannungsgenerator derart verbunden ist, um die Information über die durch den Zahlengenerator erzeugten Zahlen zu empfangen und die Frequenz des Taktsignals an die Stromversorgungsbedingungen der synchronen Logikschaltung anzupassen, wobei die Logikschaltung ein synchroner Schaltkreis ist, der durch das Taktsignal synchronisiert ist.

**14.** Elektronische Schaltung (1) nach einem der vorhergehenden Ansprüche, wobei der Spannungsgenerator (3) einen Spannungsregler mit geringem Abfall aufweist, der mit einem ersten Transistor (7) mit einer Eingangsklemme, die dazu bestimmt ist, an eine Stromquelle (6) angeschlossen zu werden, und einer Ausgangsklemme versehen ist, die angeschlossen ist, um das erste Logikmodul (2) zu speisen, wobei der erste Transistor (7) eine Steuerelektrode aufweist, die mit dem Ausgang eines Verstärkers (8) verbunden ist, wobei der Verstärker (8) eine erste Eingangsklemme aufweist, die ein periodisches Signal von einem periodischen Signalgeber (11, 12) empfängt, der konfiguriert ist, um eine Frequenz des periodischen Signals mittels einer ersten Information (NF), die an einer ersten Eingangsklemme empfangen wird, und eine Amplitude des periodischen Signals mittels einer zweiten Information (NA), die an einer zweiten Eingangsklemme empfangen wird, zu modulieren, wobei der Verstärker (8) eine zweite Eingangsklemme aufweist, die eine Spannung von einem Spannungsversorger (9, 10) empfängt, wobei der Spannungsversorger (9, 10) konfiguriert ist, um den Wert der abgegebenen Spannung in Abhängigkeit von einer dritten Information (VO) zu modulieren.

**15.** Elektronische Schaltung (1) nach einem der Ansprüche 1 bis 13, wobei der Spannungsgenerator (3) einen DC/DC-Chopper aufweist, der mit einem ersten Transistor (7) mit einer Eingangsklemme, die dazu bestimmt ist, an eine Stromquelle (6) angeschlossen zu werden, und einer Ausgangsklemme versehen ist, die angeschlossen ist, um das erste Logikmodul (2) zu speisen, wobei der erste Transistor (7) eine Steuerelektrode aufweist, die mit dem Ausgang eines periodischen Signalgenerators (13, 12) verbunden ist, der konfiguriert ist, um eine Frequenz des periodischen Signals mittels einer ersten Information (NF), die an einer ersten Klemme empfangen wird, und eine mittlere Spannung des periodischen Signals mittels einer zweiten Information (NO), die an einer zweiten Klemme empfangen wird, zu modulieren, wobei die Ausgangsklemme des ersten Transistors (7) mit dem ersten Logikmodul (2) über einen Induktor (14) und einen Filter (16) verbunden ist, der konfiguriert ist, um die Amplitude der vom ersten Transistor (7) abgegebenen Spannung mittels einer dritten Information (NA), die an einer Steuerklemme des Filters (16) empfangen wird, zu modulieren.

**Claims**

**1.** Electronic circuit (1) comprising:

- a first logic module (2) configured to perform a first function,
- a number generator (4) configured to generate at least one series of successive first numbers over a first time period,
- a voltage generator (3) connected to the number generator (4) so as to receive a first series of successive data representative of the series of first numbers, the voltage generator (3) being configured to supply the first logic module (2) with a supply voltage comprising a first supply voltage higher than a minimum operating voltage of the first logic module (2) and a variable additional second voltage having electrical characteristics that are functions at least of the first series of successive data,

the electronic circuit being **characterized in that** the voltage generator (3) is configured so as to deliver a variable additional second voltage which comprises at least:

- a component representative of a fixed voltage defined by an offset voltage value (VO),
- a component representative of a first periodic voltage defined at least by a first frequency (F) and a first amplitude (VA),

and **in that** the voltage generator (3) is configured in such a way that the value of the offset voltage (VO), the first frequency (F) and/or first amplitude (VA) are defined at least from the series of first numbers, over the first time period, taken from a first series of offset voltages comprising several different offset voltage values (VO), a second series of first frequencies (F) comprising several different first frequency values (F) and a third series of first amplitudes (VA) comprising several different first amplitude values (VA).

**2.** Electronic circuit (1) according to claim 1, wherein the voltage generator (3) is configured in such a way as to deliver the variable additional second voltage which further comprises a component representative of a second periodic voltage defined at least by a second frequency (F) and a second amplitude (VA) and wherein the voltage generator (3) is configured in such a way that the second frequency (F) and/or the second amplitude (VA) are defined at least from the series of first numbers, over the first time period, taken from several second frequencies (F) and second amplitudes (VA).

**3.** Electronic circuit (1) according to claim 2, wherein the voltage generator (3) is configured in such a way that the component representative of the first periodic voltage presents a phase shift with the component representative of the second periodic voltage and wherein the voltage generator (3) is configured in such a way that the phase shift is defined at least from the series of first numbers, over the first time period, taken from several phase shifts.

**4.** Electronic circuit (1) according to any one of claims 1 to 3, wherein the voltage generator (3) is configured to deliver a component representative of the first periodic voltage which presents a first waveform different from a second waveform of the component representative of the second periodic voltage, the first waveform and second waveform being advantageously chosen from a sinusoidal signal, a square signal, a triangular signal, a trapezoid signal, a sawtooth signal, an exponential signal and a logarithmic signal.

**5.** Electronic circuit (1) according to any one of claims 1 to 4, wherein the voltage generator (3) is configured to deliver a component representative of the first periodic voltage which presents a first duty cycle and wherein the voltage generator (3) is configured so that the first duty cycle is defined at least from the series of first numbers, over the first time period, taken from several different duty cycles.

**6.** Electronic circuit (1) according to any one of claims 1 to 5, wherein the first series of offset voltages comprises a zero value or the third series of first amplitudes (VA) comprises a zero value.

**7.** Electronic circuit (1) according to any one of claims 1 to 6, wherein the number generator (4) is supplied by the voltage generator (3) and wherein the first supply voltage is higher than a minimum operating voltage of the number generator (4).

**8.** Electronic circuit (1) according to any one of the foregoing claims, wherein the number generator (4) is connected to a register (5), the register (5) being configured to transform a number received from the number generator (4) into an address of a memory area storing one or more of the electrical characteristics of the variable additional second voltage.

**9.** Electronic circuit (1) according to any one of the foregoing claims, wherein the number generator (4) is a random number generator.

**10.** Electronic circuit (1) according to any one of the foregoing claims, wherein the number generator (4) is engineered using asynchronous logic and preferentially using asynchronous logic insensitive to delays or almost insensitive to delays.

**11.** Electronic circuit (1) according to any one of the foregoing claims, wherein the number generator (4) is configured so that the time period separating emission of two successive numbers is a function of the power supply conditions at its power supply terminals.

**12.** Electronic circuit (1) according to any one of the foregoing claims, wherein the first logic module (2) is provided with a delay generator configured to insert a delay in data processing by the first logic module (2) so as to dissociate the total processing time of said data and the power supply conditions of the first logic module (2).

**13.** Electronic circuit (1) according to any one of the foregoing claims, comprising a clock generator configured to generate a clock signal, the clock generator being connected to the number generator and/or to the voltage generator so as to receive data relative to the numbers generated by the number generator and to adjust the frequency of the clock signal to the power supply conditions of the synchronous logic circuit, the logic circuit being a synchronous circuit synchronised by said clock signal.

**14.** Electronic circuit (1) according to any one of the foregoing claims, wherein the voltage generator (3) comprises a low-dropout voltage regulator provided with a first transistor (7) having an input terminal designed to be connected to a power supply source (6) and an output terminal connected to supply the first logic module (2), the first transistor (7) having a control electrode connected to the output of an amplifier (8), the amplifier (8) having a first input terminal receiving a periodic signal from a periodic signal generator (11, 12) configured to modulate a frequency of said periodic signal by means of a first data item (NF) received on a first input terminal and an amplitude of said periodic signal by means of the second data item (NA) received on a second input terminal, the amplifier (8) having a second input terminal receiving a voltage from a voltage supply (9, 10), the voltage supply (9, 10) being configured to modulate the value of the delivered voltage according to a third data item (VO).

**15.** Electronic circuit (1) according to any one of claims 1 to 13, wherein the voltage generator (3) comprises a DC-DC chopper provided with a first transistor (7) having an input terminal designed to be connected to a power supply source (6) and an output terminal connected to supply the first logic module (2), the first transistor (7) having a control electrode connected to the output of a periodic signal generator (13, 12) configured to modulate a frequency of said periodic signal by means of a first data item (NF) received on a first terminal and a mean voltage of said periodic signal by means of a second data item (NO) received on a second terminal, the output terminal of the first transistor (7) being connected to the first logic module (2) by means of an inductor (14) and a filter (16) configured to modulate the amplitude of the voltage delivered by the first transistor (7) by means of a third data item (NA) received on a control terminal of the filter (16).

6
5
Vin
1
3
V
I
4
O
2

FIG. 1

6
5
Vin
1
3
V
I
4
O
2
17

FIG. 4

6
8
Vin
NF
F
Uref
U_control
RegF
12
11
9
7
RegVA
NA
VA
10
GND
V
3
RegVO
NO
VO
5
2,4

**FIG. 2**

5
6
3
13
Vin
NF
F
RegF
12
15
GND
7
RegVO
NO
VO
14
16
NA
VA
GND
RegVA
2,4

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040143747 A
- US 20060156039 A
- US 6698662 B
- US 20030154389 A
- FR 2958098
- US 6419159 B
- US 7205794 B
- US 6327661 B
- US 20090307516 A